# EUROPEAN PATENT APPLICATION

(11) **EP 4 395 331 A1**
(43) Date of publication of application: **03.07.2024**
(21) Application number: 22874684.8
(22) Date of filing: 19.09.2022
(51) Int. Cl.: H04N 21/254

(54) **INFORMATION DISPLAY METHOD AND APPARATUS, ELECTRONIC DEVICE, AND STORAGE MEDIUM**

(30) Priority: 28.09.2021 CN 202111140475
(71) Applicant: Beijing Zitiao Network Technology Co., Ltd., Beijing 100190 (CN)
(72) Inventor: SHUAI, Hefan, Beijing 100086 (CN); GUO, Wanyi, Beijing 100086 (CN); WANG, Yuchen, Beijing 100086 (CN); HUA, Yanting, Beijing 100086 (CN); SONG, Licong, Beijing 100086 (CN); CAO, Yirui, Beijing 100086 (CN); QIN, Yuan, Beijing 100086 (CN)
(74) Representative: Dentons UK and Middle East LLP
(86) International application number: PCT/CN2022/119547
(87) International publication number: WO 2023/051297

(57) **Abstract**

Embodiments of the present disclosure provide an information display method and apparatus, an electronic device, and a storage medium. The method comprises: playing (101) a video of recommending a target object; and displaying (102) information associated with a target audio clip in a first display area of a video playback page in response to determining that the video is played to a target video clip corresponding to the target audio clip, wherein the target audio clip is an audio clip containing a preset keyword.

## Description

### FIELD

Embodiments of the present disclosure relate to the technical field of computers, and in particular, to a method, an apparatus, an electronic device, and a storage medium for displaying information.

### BACKGROUND

At present, when an advertisement video is being played, article information of a recommended article may be displayed in a video playback page. For example, an article picture or a purchase link of the recommended article is displayed, so as to facilitate to check and purchase the recommended article.

However, in the existing advertisement videos, the displayed article information of the recommended article is relatively monotonous, resulting in a poor recommendation effect for the advertisement videos.

### SUMMARY

Embodiments of the present disclosure provide a method, an apparatus, an electronic device, and a storage medium for displaying information, so as to display diversified information and improve an effect of video recommendation.

In a first aspect, embodiments of the present disclosure provide a method of displaying information, including:
playing a video of recommending a target object; and
displaying information associated with a target audio clip in a first display area of a video playback page in response to determining that the video is played to a target video clip corresponding to the target audio clip, wherein the target audio clip is an audio clip containing a preset keyword.

In a second aspect, embodiments of the present disclosure further provide an apparatus for displaying information, including:
a video playing module, configured to play a video of recommending a target object; and
a first display module configured to display information associated with a target audio clip in a first display area of a video playback page in response to determining that the video is played to a target video clip corresponding to the target audio clip, wherein the target audio clip is an audio clip containing a preset keyword.

In a third aspect, embodiments of the present disclosure further provide an electronic device, including:
one or more processors; and
a memory, used for storing one or more programs,
wherein when executed by the one or more processors, the one or more programs cause the one or more processors to implement the method of displaying information according to embodiments of the present disclosure.

In a fourth aspect, embodiments of the present disclosure further provide a computer-readable storage medium, on which a computer program is stored, wherein when executed by a processor, the program implements the method of displaying information according to embodiments of the present disclosure.

According to the method of displaying information as provided in embodiments of the present disclosure, the video of recommending the target object is played, and the information associated with a target audio clip that contains the preset keyword is displayed in the first display area of the video playback page in response to determining that the video is played to a target video clip corresponding to the target audio clip. By utilizing the above technical solutions according to embodiments of the present disclosure, the information associated with specific voice containing the preset keyword can be displayed in the video playback page in response to determining that the video is played to the specific voice, so that not only diversified information can be displayed, but a conversion of an auditory dimension and a visual dimension can also be realized, thereby enhancing the impression of a user on the broadcast voice in the video, improving the recommendation effect of the video, enlarging the application range of the video, and reducing the production cost of the video.

### BRIEF DESCRIPTION OF THE DRAWINGS

The above and other features, advantages and aspects of embodiments of the present disclosure will become more apparent with reference to the drawings and embodiments. Throughout the drawings, the same or similar reference numerals indicate the same or similar elements. It should be understood that the drawings are schematic and that elements are not necessarily drawn to scale.
FIG. 1 is a schematic flowchart of a method of displaying information according to an embodiment of the present disclosure;
FIG. 2 is a schematic diagram of a video playback page according to an embodiment of the present disclosure;
FIG. 3 is a schematic diagram of another video playback page according to an embodiment of the present disclosure;
FIG. 4 is a schematic diagram of a mode for displaying information according to an embodiment of the present disclosure;
FIG. 5 is a schematic diagram of another mode for displaying information according to an embodiment of the present disclosure;
FIG. 6 is a schematic flowchart of another method of displaying information according to an embodiment of the present disclosure;
FIG. 7 is a schematic diagram of a mode for moving information according to an embodiment of the present disclosure;
FIG. 8 is a schematic diagram of another mode for moving information according to an embodiment of the present disclosure;
FIG. 9 is a schematic diagram of a second display area according to an embodiment of the present disclosure;
FIG. 10 is a schematic diagram of another second display area according to an embodiment of the present disclosure;
FIG. 11 is a schematic diagram of still another second display area according to an embodiment of the present disclosure;
FIG. 12 is a structural block diagram of an information display apparatus according to an embodiment of the present disclosure; and
FIG. 13 is a schematic structural diagram of an electronic device according to an embodiment of the present disclosure.

### DETAILED DESCRIPTION OF EMBODIMENTS

Hereinafter, embodiments of the present disclosure will be described in more detail with reference to the drawings. While certain embodiments of the present disclosure have been illustrated in the drawings, it is to be understood that the present disclosure may be embodied in various forms and should not be construed as being limited to the embodiments set forth herein; rather, these embodiments are provided to help understand the present disclosure more thoroughly and completely. It should be understood that the drawings and examples of the present disclosure are for illustrative purposes only and are not intended to limit the scope of the present disclosure.

It should be understood that various steps as recited in method embodiments of the present disclosure may be performed in a different order and/or in parallel. Moreover, the method embodiments may include additional steps and/or omit performing a shown step. The scope of the present disclosure is not limited in this aspect.

As used herein, the terms "include" or "comprise" and variations thereof are open-ended terms, i.e., "include, but not limited to". The term "based on" indicates "based, at least in part, on". The term "an embodiment" means "at least one embodiment"; the term "another embodiment" means "at least one further embodiment"; the term "some embodiments" means "at least some embodiments". Relevant definitions of other terms will be given in the following description.

It should be noted that definitions such as "first" or "second" mentioned in the present disclosure are only intended to distinguish between different apparatuses, modules or units, and are not intended to limit the order or interdependence of the functions performed by these apparatuses, modules or units.

It should be noted that the modifiers such as "one" and "more" mentioned in the present disclosure are intended to be illustrative and not restrictive, and those skilled in the art should understand that they should be interpreted as "one or more" unless the context clearly indicates otherwise.

The name(s) of message(s) or information interacted between multiple apparatuses in the embodiments of the present disclosure are for illustrative purposes only and are not intended to limit the scope of such message(s) or information.

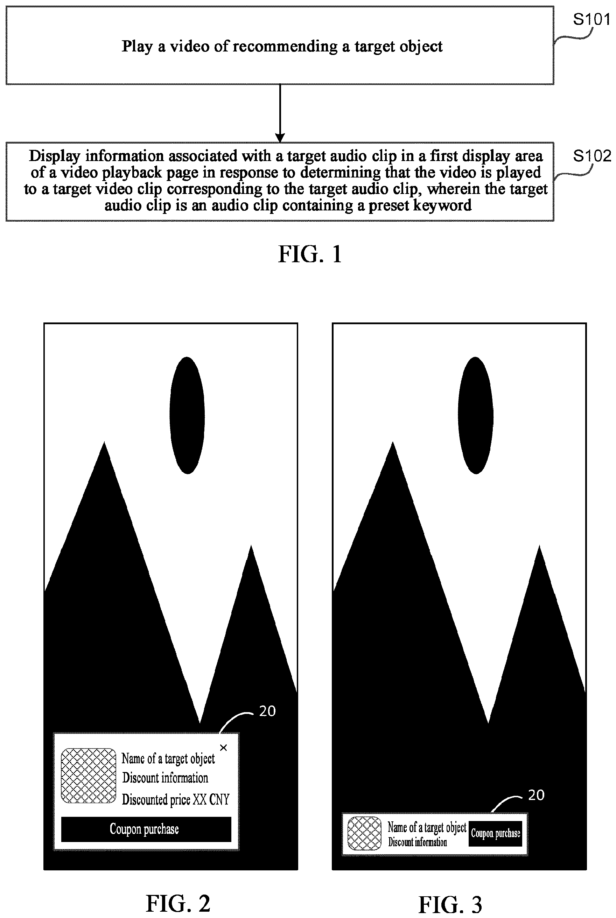

FIG. 1 is a schematic flowchart of a method of displaying information according to an embodiment of the present disclosure. The method may be performed by an information display apparatus. The information display apparatus may be implemented by software and/or hardware and may be configured in an electronic device, typically, may be configured in a mobile phone or a tablet computer. The method provided of displaying information according to an embodiment of the present disclosure is applicable to a scenario in which information display is performed on the basis of audio data of a video. As shown in FIG. 1, the information display method as provided in the present embodiment may include:
S101: playing a video of recommending a target object.

The video may include a video for recommending an object to a user, such as an advertisement video or a product sales video, or the like. Accordingly, the target object may be the object as recommended in the video, for example, an activity or an article or the like as recommended in the video. The article may be a real article or a virtual article, which is not limited in the present embodiment.

Specifically, the user may view the video by means of a video playback page. Accordingly, the electronic device may display the video playback page, switch the video played in the video playback page based on a video switching operation of the user or automatically according to a preset switching rule, and play a video of recommending a certain object (i.e., the target object) in the video playback page when switching to the video, as shown in FIG. 2 and FIG. 3.

S102: displaying information associated with a target audio clip in a first display area of the video playback page in response to determining that the video is played to a target video clip corresponding to the target audio clip, wherein the target audio clip is an audio clip including a preset keyword.

The target audio clip may be an audio clip that contains a preset keyword in the audio data of the video, that is, the audio clip contains the preset keyword in corresponding text content, for example, an audio clip corresponding to a statement or a statement fragment where the preset keyword is located. The preset keyword may be a keyword of a preset type, for example, a keyword related to discount information (e.g., make an inventory of warehouses, cost performance, price reduction, cost effective, wholesale, direct discount, discount, cheap, limited time and other words or statements related to discount information), or a keyword related to description information (e.g., words or statements related to size, color, shape, face value and the like). It is taken as an example for description below that the preset keyword is a keyword related to the discount information.

Accordingly, the target video clip is a video clip corresponding to the target audio clip in the video, that is, a video clip in the video, which is located between a corresponding start time node and an end time node of the target audio clip in the video. The information associated with the target audio clip may include information related to the content broadcast in the target audio clip, such as the content broadcast by the target audio clip, abstract information or key information of the content broadcast by the target audio clip, or information (e.g., discount information) related to the object (i.e., the target object) recommended by the target audio clip, etc. The first display area may be an area in the video playback page for displaying the information. The size and specific position of the first display area may be set as required. For example, the first display area may be set to have the same width as a second display area, and/or, the first display area may be set to be located above the second display area, located at the middle or on one side of the video playback page, etc.

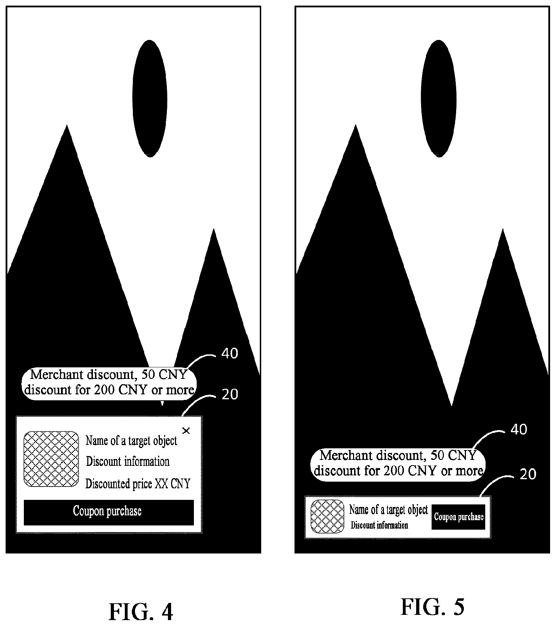

In a specific embodiment, the electronic device may acquire the information associated with the target audio clip from a server. For example, after the video of recommending the target object is uploaded to the server, before publishing the video, the server may recognize, according to a preset rule (e.g., using a pre-trained recognition model, and the like), whether the video includes the target audio clip containing the preset keyword. In response to determining that the video contains the target audio clip, the server may further determine target video clip information corresponding to the target audio clip and the information associated with the target audio clip. Therefore, in response to determining that the video is needed to be played, the electronic device may acquire, from the server, audio and video data of the video, the target video clip information and the information associated with the target audio clip, play the video in the video playback page based on the audio and video data, and display the information associated with the target audio clip in the first display area 40 of the video playback page in response to determining that the target video clip corresponding to the target video clip information is being played, as shown in FIG. 4 and FIG. 5.

In another specific embodiment, the electronic device may recognize the target video clip corresponding to the target audio clip in the video and the information thereof. For example, when needing to play the video of recommending the target object, the electronic device may firstly acquire the audio and video data of the video from the server, recognize, according to a preset rule, whether the target audio clip containing the preset keyword exists in the video. In response to determining that the video contains the target audio clip, the electronic device may further determine the target video clip information corresponding to the target audio clip and the information associated with the target audio clip. Then, the electronic device plays the video in the video playback page based on the audio and video data, and displays the information associated with the target audio clip in the first display area 40 of the video playback page in response to determining that the target video clip corresponding to the target video clip information is being played, as shown in FIG. 4 and FIG. 5.

In the present embodiment, in response to determining that the video is played, information display is performed based on voice as broadcast in the video. For example, when voice related to the discount information of the target object is played in the video, the discount information of the target object is automatically displayed in the video playback page; and/or, when voice of description for the target object is played in the video, the description information of the target object is automatically displayed in the video playback page, and so on. Therefore, conversion between information in an auditory dimension and information in a visual dimension in the video can be realized, understanding for the user on the information in the auditory dimension in the video is further enhanced, and recommendation effect of the target object is improved. In addition, since there is no need to perform information display based on any currently being played video image, it is unnecessary to require the target object to be displayed or must be appeared in the video picture as an actual article and unnecessary to require a video producer to fully understand the video in advance and determine when to perform information display, such that the application range of the video can be expanded, the recommendation of the actual article and even the virtual article can be realized, the production cost of the video can be reduced, and the recommendation cost of target recommendation can be thus reduced.

In one embodiment, the step of displaying the information associated with the target audio clip in the first display area of the video playback page may include: displaying, in the first display area of the video playback page, text information corresponding to the target audio clip, wherein the text information is obtained by performing voice recognition on the target audio clip.

In the above embodiment, the information associated with the target audio clip may be text information corresponding to the target audio clip, that is, text content corresponding to the target audio clip. Therefore, by displaying the text information corresponding to the audio clip containing the preset keyword in the video playback page when playing the audio clip, for example, synchronously displaying the currently being broadcast discount information and the like in the video playback page in a form of text, an effect of "what you hear is what you see" can be achieved, thereby enhancing the impression and understanding for the user on the broadcast content in the audio clip, and improving the probability of the user accepting the recommendation of the target object.

Specifically, the electronic device may firstly determine or determine by means of the server a target audio clip contained in the video of recommending the target object. Then, the electronic device may play the video of recommending the target object in the video playback page, and display the text information corresponding to the target audio clip in the first display area of the video playback page in response to determining that the video is played to a target video clip corresponding to the target audio clip that contains a preset keyword. For example, in response to determining that the video is played to a video clip corresponding to an audio clip that contains a keyword related to discount information, the electronic device may acquire text information corresponding to the audio clip, which is obtained by the electronic device or the server by means of performing voice recognition on the audio clip in advance, or the electronic device may perform voice recognition on the audio clip to obtain the text information corresponding to the audio clip, and the electronic device may display the text information in the first display area of the video playback page. The display state of the text information corresponding to the target audio clip, for example, the font, font size and/or color or the like, may be set as required.

In the above embodiment, after the text information corresponding to the target audio clip is displayed, the text information may contain a text that is currently being broadcast in the video and a text that is not currently being broadcast in the video (including a text that has been broadcast and/or a text that has not been broadcast in the video). Therefore, during playback process of the video, the text that is currently being broadcast in the video and the text that is not currently being broadcast in the video may be displayed in the same display state; or the text that is currently being broadcast in the video and the text that is not currently being broadcast in the video may also be displayed in different display states, so as to improve the attention and impression for the user on the text information (especially the text that is currently being broadcast in the text information), and to improve the interestingness of displaying the text information. At this time, optionally, the step of displaying, in the first display area of the video playback page, the text information corresponding to the target audio clip, may include: displaying, in the first display area of the video playback page, text currently being broadcast in the text information in a first display state, and displaying text that is not currently being broadcast in the text information in a second display state, wherein the first display state and the second display state may be two display states in which display modes, such as the font, font size, and/or color or the like, are not completely the same.

It should be noted that, in response to determining that the text information corresponding to the target audio clip not be simultaneously displayed in the first display area, part of the text information, which includes the currently being broadcast text in the video, in the text information may be displayed in the first display area, and the text information displayed in the first display area may be updated as playback of the video. For example, the text information displayed in the first display area is updated in a scrolling update mode or page turning mode, etc.

In the present embodiment, the display duration of the information associated with the target audio clip may be set as required. For example, the information associated with the target audio clip may be set to be displayed for a preset duration (e.g., 3s or 5s or the like). The target audio clip may also be set to be displayed until playback of the video is completed or playback of the target video clip is completed, etc.

Considering the relevance between the displayed information and the currently being played content, in an embodiment of the present disclosure, preferably, the information associated with the target audio clip is displayed in the first display area only in response to determining that the target audio clip is played, that is, only in the process of playing the target video clip corresponding to the target audio clip. At this time, the information display method according to the present embodiment may further include: in response to determining that playback of the target video clip is completed, stopping displaying the information in the first display area, for example, stopping displaying the information associated with the target audio clip at any position in the video playback page, or, moving the information associated with the target audio clip to a display area other than the first display area in the video playback page for display, etc.

In addition, when there are multiple audio clips containing a preset keyword in the video, a certain audio clip (e.g., a first audio clip, or the like) among the multiple audio clips may be used as the target audio clip, or, the multiple audio clips may be used as target audio clips. When all the multiple audio clips are used as target audio clips, for each target audio clip, the information associated with the target audio clip may be displayed in the first display area of the video playback page during the process of playing a video clip corresponding to the target audio clip; or the information associated with the multiple target audio clips is displayed in the first display area of the video playback page in response to determining that the first audio clip is played until playback of the last target audio clip is completed or until playback of the video is completed, which may specifically be set as required.

According to the information display method provided in the present embodiment, a video of recommending a target object is played; and in response to determining that the video is played to a target video clip corresponding to a target audio clip that contains a preset keyword, information associated with the target audio clip is displayed in a first display area of a video playback page. By using the above technical solutions according to the present embodiment, in response to determining that the video is played to specific voice containing the preset keyword, the information associated with the specific voice is displayed in the video playback page, so that not only diversified information can be displayed, but the conversion of the auditory dimension and the visual dimension can also be realized, thereby enhancing the impression of the user on the broadcast voice in the video, improving a recommendation effect of the video, expanding the application range of the video, and reducing the production cost of the video.

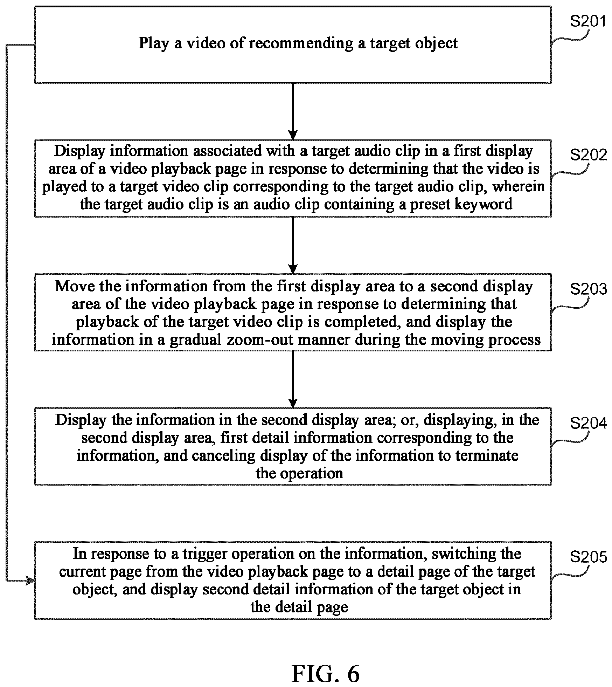

FIG. 6 is a schematic flowchart of another information display method according to an embodiment of the present disclosure. The solutions according to the embodiment of the present disclosure may be combined with one or more optional solutions in the above embodiments. Optionally, the step of stopping displaying the information in the first display area may include: moving the information from the first display area to a second display area of the video playback page, and displaying the information in a gradual zoom-out manner during the moving process, wherein the second display area is used for displaying object information of the target object.

Optionally, after the step of moving the information from the first display area to the second display area of the video playback page, the method may further include: displaying the information in the second display area; or, displaying, in the second display area, first detail information corresponding to the information, and canceling display of the information.

Optionally, after the step of displaying the information associated with the target audio clip in the first display area of the video playback page, the method may further include: in response to a trigger operation on the information, switching the current page from the video playback page to a detail page of the target object, and displaying second detail information of the target object in the detail page.

Accordingly, as shown in FIG. 6, the information display method provided according to the present embodiment may include:
S201: play a video of recommending a target object.
S202: displaying information associated with a target audio clip in a first display area of the video playback page in response to determining that the video is played to a target video clip corresponding to the target audio clip, and executing S203 or S205, wherein the target audio clip is an audio clip containing a preset keyword.
S203: moving the information from the first display area to a second display area of the video playback page in response to determining that playback of the target video clip is completed, and displaying the information in a gradual zoom-out manner during the moving process, wherein the second display area is used for displaying object information of the target object.

In the present embodiment, in response to determining that playback of the target video clip is completed, the information displayed in the first display area may be controlled to move into the second display area, so as to guide the user to view the object information of the target object displayed in the second display area and to perform interaction in the second display area. The object information may include information of the target object, such as an image, a name, a price, discount information of the target object, etc.

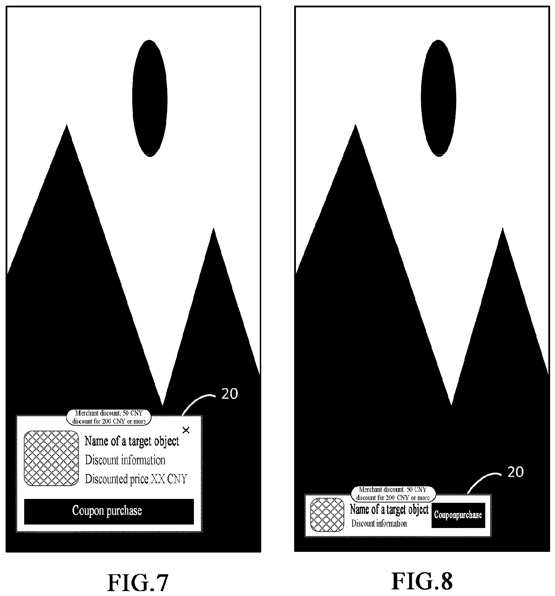

Specifically, as shown in FIG. 2 and FIG. 3, the electronic device plays the video of recommending the target object in the video playback page, and displays the object information of the target object in the second display area 20 of the video playback page. In response to determining that the video is played to the target video clip corresponding to the target audio clip, the electronic device displays the information associated with the target audio clip in the first display area 40 of the video playback page, as shown in FIG. 4 and FIG. 5, and continues to play the video. In response to determining that playback of the target video clip is completed, the electronic device controls the information associated with the target audio clip as displayed in the first display area 40 to move into the second display area 20, and gradually reduces the display size of the information during the moving process, as shown in FIG. 7 and FIG. 8. During the moving process, the moving trajectory, the moving speed and the zoom-out speed of the information may be set as required, which is not limited in the resent embodiment.

S204: displaying the information in the second display area; or, displaying, in the second display area, first detail information corresponding to the information, and canceling display of the information to terminate the operation.

The first detail information may be detail information of the information associated with the target audio clip. For example, in response to determining that the target audio clip is an audio clip related to discount information, the detail information may be detailed discount information of the target object, such as an original price, the current price, and/or a discount amplitude of the target object.

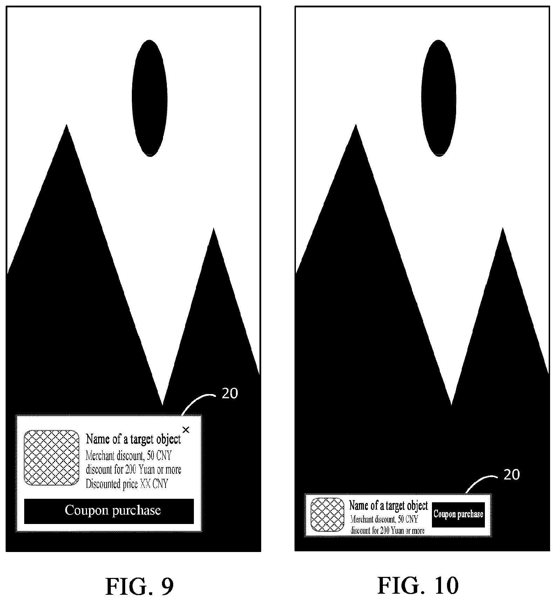

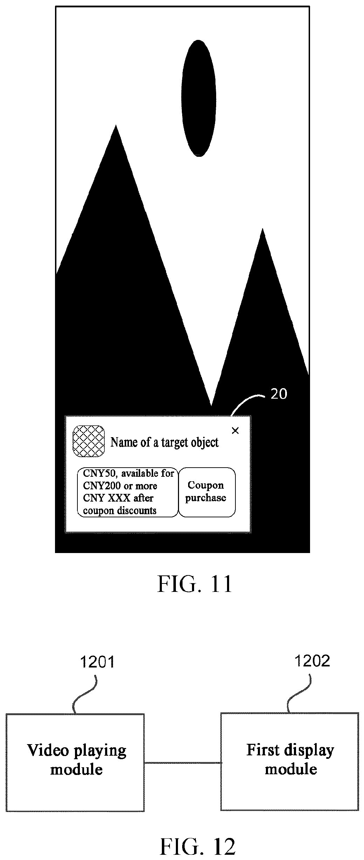

Specifically, in response to determining that playback of the target video clip corresponding to the target audio clip is completed, the electronic device controls the information associated with the target audio clip to move from the first display area 40 to the second display area 20, and continues to display the information in the second display area 20 in response to determining that the information is moved into the second display area 20, as shown in FIG. 9 and FIG. 10. Alternatively, the electronic device may display the detail information of the information in the second display area 20 and stops displaying the information, as shown in FIG. 11. For example, the information/detail information may be displayed in a blank area of the second display area 20, the object information of the target object, which is originally displayed in the second display area 20, is controlled to move and/or zoom out and the information/detail information is displayed in the blank area formed by the movement, and/or, certain information (e.g., discount information originally presented in the second display area 20 in the form of a subtitle) originally displayed in the second display area 20 is replaced with the information/detail information for display, etc.

In the present embodiment, whether the information/detail information of the information is displayed in the second display area may be determined according to the size of the second display area and/or the type of the keyword contained in the target audio clip. For example, in response to determining that the second display area is a display area with a relatively small size (e.g., less than a preset size threshold value), the information may be directly displayed in the second display area. In response to determining that the second display area is a display area with a relatively large size (e.g., greater than the preset size threshold value), the detail information of the information may be directly displayed in the second display area. It may be further determined whether the preset keyword contained in the target audio clip is a keyword of a preset type, and if so, the detail information of the information may be displayed in the second display area, or if not, the information may be displayed in the second display area.

In an example that a preset keyword is a keyword related to discount information and the information associated with the target audio clip is text information corresponding to the target audio clip. In response to determining that the size of the second display area 20 is relatively large and the preset keyword contained in the target audio clip is not the keyword of the preset type, or, in response to determining that the size of the second display area 20 is relatively small, the text information of the target audio clip may be controlled to move from the first display area 40 to a display position (e.g., a subtitle position) of the discount information of the target object in the second display area 20, and the discount information displayed at the position is replaced with the information, as shown in FIG. 9 and FIG. 10. In response to determining that the size of the second display area 20 is relatively large and the preset keyword contained in the target audio clip is the keyword of the preset type (e.g., a keyword related to limited-time offer, discount, direct discount or discount coupon, and the like), the text information of the target audio clip may be controlled to move from the first display area 40 to a certain position (e.g., a boundary position or a central position, and the like) of the second display area 20, an image, the name and other information of the target object, which are originally displayed in the second display area 20, are controlled to zoom out and the display positions thereof are adjusted toward the boundary direction, and the detail information of the information is displayed in a central area of the second display area 20, as shown in FIG. 11 (which taking the detail information is discount coupon information as an example in FIG. 11).

S205: in response to a trigger operation on the information, switching the current page from the video playback page to a detail page of the target object, and displaying second detail information of the target object in the detail page.

The second detail information may be understood as detail information of the target object, such as detailed introduction information of the target object, etc.

Exemplarily, the electronic device plays a video of recommending a target object in the video playback page, and displays information associated with a target audio clip in a first display area of a video playback page in response to determining that the video contains a target video clip corresponding to the target audio clip that contains a preset keyword. Therefore, when the user needs to view detail information of the target object recommended in the video, for example, when the user wants to view the detail information of the information or wants to purchase the target object, the user may trigger (e.g., click) the information. Accordingly, when the electronic device detects that the user triggers the information displayed in the video playback page, the electronic device may switch the current page from the video playback page to the detail page of the target object, and display the detail information of the target object in the detail page for the user to view. The detail page and the video playback page are located in the same or different application software. In response to determining that the detail page and the video playback page are located in different application software, by means of calling a corresponding interface of the application software where the detail page is located, the application software where the detail page is located may be instructed to display the detail page of the target object.

In addition, in response to determining that information associated with the target audio clip is moved from the first display area to the second display area or is displayed in the second display area, if it is detected that the user triggers the information, or, when the user triggering any position in the second display area (including a control position or a non-control position in the second display area) has been detected, the current display page may also be switched from the video playback page to the detail page of the target object, so that the user may view the detail information of the target object.

According to the information display method provided in the present embodiment, by means of displaying and moving the information associated with the target audio clip, the user can be further guided to perform interaction, and accordingly, richer information display and interaction modes are provided for the user, therefore, viewing and interaction experiences of the user as well as the recommendation effect of the video can be improved.

FIG. 12 is a structural block diagram of an information display apparatus according to an embodiment of the present disclosure. The apparatus may be implemented by software and/or hardware, may be configured in an electronic device, and typically, may be configured in a mobile phone or a tablet computer, and may display information by means of pointing to the information display method. As shown in FIG. 12, the information display apparatus provided according to the present embodiment may include: a video playing module 1201 and a first display module 1202, wherein,
the video playing module 1201 is configured to play a video of recommending a target object; and
the first display module 1202 is configured to: display information associated with a target audio clip in a first display area of a video playback page in response to determining that the video is played to a target video clip corresponding to the target audio clip, wherein the target audio clip is an audio clip containing a preset keyword.

According to the information display apparatus provided according to the present embodiment, the video of recommending the target object is played by the video playing module; and in response to determining that the video is played to the target video clip corresponding to the target audio clip that contains the preset keyword, the information associated with the target audio clip is displayed by the first display module in the first display area of the video playback page. By using the above technical solutions according to the present embodiment, in response to determining that the video is played to specific voice containing the preset keyword, information associated with the specific voice is displayed in the video playback page, so that not only diversified information can be displayed, but the conversion of the auditory dimension and the visual dimension can also be realized, thereby enhancing the impression of the user on the broadcast voice in the video, improving the recommendation effect of the video, expanding the application range of the video, and reducing the production cost of the video.

In the above solution, the first display module 1202 may be configured to: display, in the first display area of the video playback page, text information corresponding to the target audio clip, wherein the text information is obtained by performing voice recognition on the target audio clip.

In the above solution, the first display module 1202 may be specifically configured to: display, in the first display area of the video playback page, a currently being broadcast text in the text information in a first display state, and display text not currently being broadcast in the text information in a second display state.

Further, the information display apparatus provided according to the present embodiment may further include: a second display module, configured to: stop displaying the information in the first display area in response to determining that playback of the target video clip is completed.

In the above solution, the second display module according to the present embodiment may be configured to: move the information from the first display area to a second display area of the video playback page, and display the information in a gradual zoom-out manner during the moving process, wherein the second display area is used for displaying object information of the target object.

Further, the information display apparatus provided according to the present embodiment may further include: a third display module, configured to: after moving the information from the first display area to the second display area of the video playback page, display the information in the second display area; or, display, in the second display area, first detail information corresponding to the information, and cancel the display of the information.

Further, the information display apparatus provided according to the present embodiment may further include: a page switching module, configured to: after displaying the information associated with the target audio clip in the first display area of the video playback page, in response to a trigger operation on the information, switch the current page from the video playback page to a detail page of the target object, and display second detail information of the target object in the detail page.

The information display apparatus provided according to the embodiment of the present disclosure may perform the information display method provided according to any embodiment of the present disclosure, and has corresponding functional modules and beneficial effects of performing the information display method. For the technical details that are not described in detail in the present embodiment, reference may be made to the information display method provided according to any embodiment of the present disclosure.

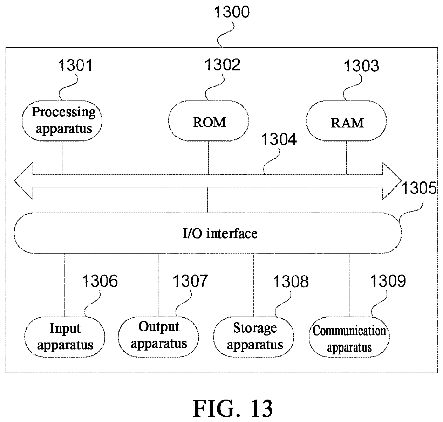

Reference is now made to FIG. 13, which illustrates a structural schematic diagram of an electronic device (e.g., a terminal device) 1300 suitable for implementing an embodiment of the present disclosure. The terminal device in the embodiments of the present disclosure may include, but is not limited to, a mobile terminal such as a mobile phone, a notebook computer, a digital broadcast receiver, a personal digital assistant (PDA), a PAD (Tablet Computer), a portable multimedia player (PMP), an in-vehicle terminal (e.g., an in-vehicle navigation terminal), and the like, and a fixed terminal such as a digital TV, a desktop computer, etc. The electronic device shown in FIG. 13 is merely an example and should not impose any limitations on the functionality and scope of use of the embodiments of the present disclosure.

As shown in FIG. 13, the electronic device 1300 may include a processing apparatus (e.g., a central processing unit, a graphics processing unit, etc.) 1301 that may perform various suitable actions and processes in accordance with a program stored in a read-only memory (ROM) 1302 or a program loaded from a storage apparatus 1308 into a random access memory (RAM) 1303. In the RAM 1303, various programs and data needed by the operation of the electronic device 1300 are also stored. The processing apparatus 1301, the ROM 1302 and the RAM 1303 are connected to each other via a bus 1304. An input/output (I/O) interface 1305 is also connected to the bus 1304.

In general, the following apparatuses may be connected to the I/O interface 1305: an input apparatus 1306, including, for example, a touch screen, a touch pad, a keyboard, a mouse, a camera, a microphone, an accelerometer, a gyroscope, and the like; an output apparatus 1307, including, for example, a liquid crystal display (LCD), a speaker, a vibrator, and the like; a storage apparatus 1308, including, for example, a magnetic tape, a hard disk, and the like; and a communication apparatus 1309. The communication apparatus 1309 may allow the electronic device 1300 to communicate with other devices to exchange data in a wireless or wired manner. While FIG. 13 illustrates the electronic device 1300 having various apparatuses, it is to be understood that not all illustrated apparatuses are required to be implemented or provided. More or fewer apparatuses may alternatively be implemented or provided.

In particular, the processes described above with reference to the flowcharts may be implemented as computer software programs in accordance with the embodiments of the present disclosure. For example, the embodiments of the present disclosure may include a computer program product, which includes a computer program carried on a non-transitory computer-readable medium, and the computer program contains program codes for performing the method illustrated by the flowcharts. In such embodiments, the computer program may be downloaded and installed from a network via the communication apparatus 1309, or installed from the storage apparatus 1308, or installed from the ROM 1302. When the computer program is executed by the processing apparatus 1301, the above functions defined in the method of the embodiments of the present disclosure are performed.

It should be noted that, the computer-readable medium described above in the present disclosure may be either a computer-readable signal medium or a computer-readable storage medium, or any combination of the two. The computer-readable storage medium may be, for example, but is not limited to, an electronic, magnetic, optical, electromagnetic, infrared, or semiconductor system, apparatus or device, or a combination of any of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk-read-only memory (CD-ROM), an optical storage device, a magnetic storage device, or any suitable combination of the above. In the present disclosure, the computer-readable storage medium may be any tangible medium that contains or stores a program, wherein the program may be used by or in conjunction with an instruction execution system, apparatus or device. In the present disclosure, the computer-readable signal medium may include a data signal that is included in a baseband or is propagated as part of a carrier, wherein the data signal carries computer-readable program codes. Such propagated data signal may take multiple forms, including, but not limited to, electromagnetic signals, optical signals, or any suitable combination thereof. The computer-readable signal medium may also be any computer-readable medium other than the computer-readable storage medium, and the computer-readable signal medium may send, propagate or transport the program for use by or in conjunction with the instruction execution system, apparatus or device. The program codes contained on the computer-readable medium may be transmitted with any suitable medium including but not limited to: an electrical wire, an optical cable, radio frequency (RF), and the like, or any suitable combination thereof.

In some embodiments, a client and a server may communicate using any currently known or future-developed network protocol, such as an HyperText Transfer Protocol (HTTP), and may be interconnected with any form or medium of digital data communication (e.g., a communication network). Examples of the communication network include a local area network ("LAN"), a wide area network ("WAN"), an international network (e.g., the Internet), and a peer-to-peer network (e.g., an ad hoc peer-to-peer network), as well as any currently known or future-developed networks.

The computer-readable medium may be contained in the above electronic device. The computer-readable medium may also be present separately and not be assembled into the electronic device.

The computer-readable medium carries one or more programs that, when executed by the electronic device, cause the electronic device to: play a video of recommending a target object; and in response to determining that the video is played to a target video clip corresponding to a target audio clip, display information associated with the target audio clip in a first display area of a video playback page, wherein the target audio clip is an audio clip containing a preset keyword.

Computer program codes for executing operations of the present disclosure may be written in one or more programming languages or combinations thereof. The programming languages may include, but not limited to, an object-oriented programming language, such as Java, smalltalk, C ++, and a conventional procedural programming language, such as the "C" programming language or similar programming languages. The program codes may be executed entirely on a user computer, executed partly on the user computer, executed as a stand-alone software package, executed partly on the user computer as well as partly on a remote computer, or executed entirely on the remote computer or the server. In a situation involving the remote computer, the remote computer may be connected to the user computer through any type of network, including a local area network (LAN) or a wide area network (WAN), or it may be connected to an external computer (e.g., through the Internet using an Internet Service Provider).

The flowcharts and block diagrams in the drawings illustrate the architecture, functions and operations of possible implementations of systems, methods and computer program products according to various embodiments of the present disclosure. In this regard, each block in the flowcharts or block diagrams may represent a module, a program segment, or a part of a code, which contains one or more executable instructions for implementing specified logical functions. It should also be noted that, in some alternative implementations, the functions noted in the block may occur out of the order noted in the drawings. For example, two blocks shown in succession may, in fact, be executed substantially concurrently, or the blocks may sometimes be executed in a reverse order, depending upon the functions involved. It will also be noted that each block of the block diagrams and/or flowcharts, and combinations of the blocks in the block diagrams and/or flowcharts may be implemented by dedicated hardware-based systems for performing specified functions or operations, or combinations of dedicated hardware and computer instructions.

The units involved in the described embodiments of the present disclosure may be implemented in a software or hardware manner. The names of the units do not constitute limitations of the units themselves in a certain case.

The functions described herein above may be performed, at least in part, by one or more hardware logic components. For example, without limitation, example types of the hardware logic components that may be used may include: field programmable gate arrays (FPGAs), application-specific integrated circuits (ASICs), application-specific standard products (ASSPs), system on chips (SOCs), complex programmable logic devices (CPLDs), and so on.

In the context of the present disclosure, a machine-readable medium may be a tangible medium, which may contain or store a program for use by or for use in combination with an instruction execution system, an apparatus or a device. The machine-readable medium may be a machine-readable signal medium or a machine-readable storage medium. The machine-readable medium may include, but is not limited to, an electronic, a magnetic, an optical, an electromagnetic, an infrared, or a semiconductor system, apparatus or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or a flash memory), an optical fiber, a compact disc-read-only memory (CD-ROM), an optical storage device, a magnetic storage device, or any suitable combination thereof.

According to one or more embodiments of the present disclosure, Example 1 provides a method of displaying information, including:
playing a video of recommending a target object; and
displaying information associated with a target audio clip in a first display area of a video playback page in response to determining that the video is played to a target video clip corresponding to the target audio clip, wherein the target audio clip is an audio clip containing a preset keyword.

According to one or more embodiments of the present disclosure, in Example 2 according to the method in Example 1, the step of displaying the information associated with the target audio clip in the first display area of the video playback page includes:
displaying, in the first display area of the video playback page, text information corresponding to the target audio clip, wherein the text information is obtained by performing voice recognition on the target audio clip.

According to one or more embodiments of the present disclosure, in Example 3 according to the method in Example 2, the step of displaying, in the first display area of the video playback page, the text information corresponding to the target audio clip, includes:
displaying text currently being broadcast in the text information in a first display state and displaying text not currently being broadcast in the text information in a second display state in the first display area of the video playback page.

According to one or more embodiments of the present disclosure, in Example 4 according to the methods in Examples 1 to 3, the method further includes:
stopping displaying the information in the first display area in response to determining that playback of the target video clip is completed.

According to one or more embodiments of the present disclosure, in Example 5 according to the method in Example 4, the step of stopping displaying the information in the first display area includes:
moving the information from the first display area to a second display area of the video playback page, and displaying the information in a gradual zoom-out manner during the moving process, wherein the second display area is used for displaying object information of the target object.

According to one or more embodiments of the present disclosure, in Example 6 according to the method in Example 5, after the step of moving the information from the first display area to the second display area of the video playback page, the method further includes:
displaying the information in the second display area; or,
displaying, in the second display area, first detail information corresponding to the information, and canceling display of the information.

According to one or more embodiments of the present disclosure, in Example 7 according to the methods in Examples 1 to 3, after the step of displaying the information associated with the target audio clip in the first display area of the video playback page, the method further includes:
in response to a trigger operation for the information, switching the current page from the video playback page to a detail page of the target object, and displaying second detail information of the target object in the detail page.

According to one or more embodiments of the present disclosure, Example 8 provides an apparatus for displaying information, including:
a video playing module, configured to play a video of recommending a target object; and
a first display module configured to display information associated with a target audio clip in a first display area of a video playback page in response to determining that the video is played to a target video clip corresponding to the target audio clip, wherein the target audio clip is an audio clip containing a preset keyword.

According to one or more embodiments of the present disclosure, Example 9 provides an electronic device, including:
one or more processors; and
a memory, used for storing one or more programs,
wherein when executed by the one or more processors, the one or more programs cause the one or more processors to implement the method of displaying information in any of Examples 1 to 7.

According to one or more embodiments of the present disclosure, Example 10 provides a computer-readable storage medium, on which a computer program is stored, wherein when executed by a processor, the program implements the method of displaying information according to any one of Examples 1 to 7.

What have been described above are only preferred embodiments of the present disclosure and illustrations of the technical principles employed. It will be appreciated by those skilled in the art that the scope of the present disclosure is not limited to the technical solutions constituted by specific combinations of the above technical features, and meanwhile should also include other technical solutions formed by any combinations of the above technical features or equivalent features thereof without departing from the conception of the disclosure as stated above. For example, technical solutions may be formed by mutual replacement of the above features with technical features having similar functions disclosed in the present disclosure (but is not limited to).

In addition, although operations are depicted in a particular order, this should not be understood as requiring that these operations are performed in the particular order shown or in a sequential order. In certain circumstances, multitasking and parallel processing may be advantageous. Similarly, although several specific implementation details have been contained in the above discussion, these should not be construed as limiting the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the present theme has been described in a language specific to structural features and/or methodological actions, it is to be understood that the present theme defined in the appended claims is not necessarily limited to the specific features or actions described above. Rather, the specific features and actions described above are merely example forms of implementing the claims.

## Claims

1. A method of displaying information, comprising:
playing (101) a video of recommending a target object; and
displaying (102) information associated with a target audio clip in a first display area of a video playback page in response to determining that the video is played to a target video clip corresponding to the target audio clip,
wherein the target audio clip is an audio clip containing a preset keyword.

2. The method according to claim 1, wherein the step of displaying the information associated with the target audio clip in the first display area of the video playback page comprises:
displaying, in the first display area of the video playback page, text information corresponding to the target audio clip, wherein the text information is obtained by performing voice recognition on the target audio clip.

3. The method according to claim 2, wherein the step of displaying, in the first display area of the video playback page, the text information corresponding to the target audio clip, comprises:
displaying text currently being broadcast in the text information in a first display state and displaying text not currently being broadcast in the text information in a second display state in the first display area of the video playback page.

4. The method according to any of claims 1-3, further comprising:
stopping displaying the information in the first display area in response to determining that playback of the target video clip is completed.

5. The method according to claim 4, wherein the step of stopping displaying the information in the first display area comprises:
moving the information from the first display area to a second display area of the video playback page, and displaying the information in a gradual zoom-out manner during the moving process, wherein the second display area is used for displaying object information of the target object.

6. The method according to claim 5, wherein after the step of moving the information from the first display area to the second display area of the video playback page, the method further comprises:
displaying the information in the second display area; or,
displaying, in the second display area, first detail information corresponding to the information, and canceling the display of the information.

7. The method according to any of claims 1-3, wherein after the step of displaying the information associated with the target audio clip in the first display area of the video playback page, the method further comprises:
in response to a trigger operation for the information, switching the current page from the video playback page to a detail page of the target object, and displaying second detail information of the target object in the detail page.

8. An apparatus for displaying information, comprising:
a video playing module (1201), configured to play a video of recommending a target object; and
a first display module (1202) configured to display information associated with a target audio clip in a first display area of a video playback page in response to determining that the video is played to a target video clip corresponding to the target audio clip, wherein the target audio clip is an audio clip containing a preset keyword.

9. An electronic device, comprising:
one or more processors; and
a memory, used for storing one or more programs,
wherein when executed by the one or more processors, the one or more programs cause the one or more processors to implement the method of displaying according to any of claims 1-7.

10. A computer-readable storage medium on which a computer program is stored, wherein when executed by a processor, the program implements the method of displaying information according to any of claims 1-7.
